(19) Europäisches Patentamt
European Patent Office
Office européen des brevets

(11) **EP 2 726 433 B1**

(12) **FASCICULE DE BREVET EUROPEEN**

(45) Date de publication et mention
de la délivrance du brevet:
**21.12.2016 Bulletin 2016/51**

(21) Numéro de dépôt: **12734858.9**

(22) Date de dépôt: **28.06.2012**

(51) Int Cl.:
***C04B 24/38*** *(2006.01)*     ***C04B 28/14*** *(2006.01)*
***C04B 28/16*** *(2006.01)*

(86) Numéro de dépôt international:
**PCT/EP2012/062537**

(87) Numéro de publication internationale:
**WO 2013/000989 (03.01.2013 Gazette 2013/01)**

(54) **AMIDON POUR LE RENFORT DU COEUR DES PLAQUES DE PLATRE**

STÄRKE ZUR VERSTÄRKUNG DES KERNS VON GIPSPLATTEN

STARCH FOR REINFORCING THE CORE OF PLASTERBOARDS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.06.2011 FR 1155855
17.10.2011 PCT/FR2011/052412**

(43) Date de publication de la demande:
**07.05.2014 Bulletin 2014/19**

(73) Titulaire: **Etex Building Performance International
SAS
84000 Avignon (FR)**

(72) Inventeur: HOANG, Lê-Chiên
**F-38300 Ruy-Montceau (FR)**

(74) Mandataire: **Van Steenlandt, Wim August Maria
Redco NV-SA
Research And Development Company
Kuiermansstraat 1
1880 Kapelle-op-den-Bos (BE)**

(56) Documents cités:
**FR-A1- 2 899 225     US-A1- 2004 045 481**

Remarques:
Le dossier contient des informations techniques
présentées postérieurement au dépôt de la demande
et ne figurant pas dans le présent fascicule.

EP 2 726 433 B1

**Description**

La présente invention se rapporte à une composition de plâtre et d'amidon oxydé, à un élément pour le domaine de la construction comprenant cette composition ainsi qu'à l'utilisation d'amidon pour augmenter la résistance mécanique du coeur des plaques de plâtre.

Les plaques de plâtre comprennent généralement deux feuilles de parements, par exemple en papier cartonné, prenant en sandwich une couche de plâtre formant le coeur de la plaque. Cependant ces plaques sont assez lourdes. Aussi il est devenu nécessaire de les alléger. Cependant l'allègement des plaques de plâtre a pour inconvénient de diminuer la résistance mécanique à la compression des plaques de plâtre.

Aussi, il est devenu nécessaire de trouver un autre moyen pour améliorer la résistance mécanique à la compression du coeur des plaques de plâtre.

Aussi le problème que se propose de résoudre l'invention est de fournir un nouveau moyen pour renforcer le coeur des plaques de plâtre.

De manière inattendue, les inventeurs ont mis en évidence qu'il est possible d'utiliser de l'amidon oxydé ayant un profil rhéologique spécifique et présentant une viscosité contrôlée aux températures de séchage des plaques de plâtre.

Il est connu d'utiliser de l'amidon comme agent de liaison entre le parement et le coeur des plaques de plâtre. Ces amidons sont généralement modifiés pour diminuer leur viscosité et pour augmenter leur solubilité dans l'eau à une température modérée. Ils sont ajoutés dans la pâte de plâtre servant à réaliser le coeur. Pendant le séchage des plaques lorsque la température augmente, ils se solubilisent et migrent avec l'eau vers la surface de la plaque là où se trouvent les parements. Or lorsque la température augmente pendant le séchage, l'amidon migre vers la surface avec l'eau et reste peu dans le coeur de la plaque de plâtre à cause de la fluidité de l'amidon.

Cette invention propose des amidons oxydés qui se dissolvent dans le coeur des plaques de plâtre mais qui ne migrent pratiquement pas vers les surfaces (parement).

Dans ce but, la présente invention propose une composition comprenant du sulfate de calcium semihydraté ou anhydre, de l'eau et de l'amidon oxydé, ledit amidon oxydé présentant :

- une viscosité brookfield inférieure ou égale à 2 cPs à une température inférieure ou égale à 55 °C; et
- un maximum de viscosité brookfield à une température comprise de 65°C à 100°C ; et
- un maximum de viscosité brookfield compris de 100 cPs à 3000 cPs ;

la viscosité brookfield étant mesurée pour une solution aqueuse d'amidon oxydé à une concentration de 8%, pourcentage en masse.

L'invention propose également un élément pour le domaine de la construction réalisé en utilisant la composition décrite ci-dessus.

L'invention propose également l'utilisation d'amidon oxydé pour augmenter la résistance mécanique du coeur des plaques de plâtre, ledit amidon oxydé présentant :

- une viscosité brookfield inférieure ou égale à 2 cPs à une température inférieure ou égale à 55 °C; et
- un maximum de viscosité brookfield à une température comprise de 65 °C à 100°C ; et
- un maximum de viscosité brookfield compris de 100 cPs à 3000 cPs ;

la viscosité brookfield étant mesurée pour une solution aqueuse d'amidon oxydé à une concentration de 8%, pourcentage en masse.

L'invention offre au moins l'un des avantages décrits ci-après.

Avantageusement, l'utilisation d'amidon oxydé selon l'invention permet d'augmenter la résistance mécanique du coeur des plaques de plâtre d'au moins 10 % comparativement à la même plaque sans l'utilisation de cet amidon oxydé.

Avantageusement, l'utilisation d'amidon oxydé selon l'invention présente des résultats très satisfaisants sur tous les types de plâtres.

Avantageusement, les amidons proposés ne sont pas solubles dans l'eau à une température inférieure ou égale à 45 °C, cela permet de ne pas modifier la rhéologie du plâtre pendant le malaxage qui a lieu généralement à une température inférieure ou égale à 45 °C. Par contre, ils se solubilisent dans le coeur des plaques pendant le séchage.

Enfin l'invention a pour avantage de pouvoir être utilisée dans l'industrie, par exemple l'industrie du bâtiment ou l'industrie de la construction d'éléments en plâtre.

D'autres avantages et caractéristiques de l'invention apparaîtront clairement à la lecture de la description et des exemples donnés à titre purement illustratif et non limitatif qui vont suivre.

Par les termes suivants, on entend de préférence selon la présente invention :

- pour gypse ou sulfate de calcium dihydraté : $CaSO_4 \cdot 2(H_2O)$ ;

- pour sulfate de calcium semihydrate ou sulfate de calcium partiellement anhydre:

$$CaSO_4 \cdot 0.5H_2O \; ;$$

- pour sulfate de calcium anhydre ou anhydrite (type II ou type III) ou sulfate de calcium totalement anhydre : $CaSO_4$.

Par le terme "plâtre", on entend de préférence selon l'invention aussi bien le sulfate de calcium sous sa forme $CaSO_4 \cdot 0.5H_2O$ que sous sa forme $CaSO_4 \cdot 2(H_2O)$ après hydratation.

Par l'expression « éléments pour le domaine de la construction », on entend généralement selon la présente invention tout élément d'une construction comme par exemple un mur, une cloison, une contre-cloison, un plafond, un panneau ou une plaque de plâtre.

Tout d'abord l'invention a pour objet une composition comprenant du sulfate de calcium semihydraté ou anhydre, de l'eau et de l'amidon oxydé, ledit amidon oxydé présentant :

- une viscosité brookfield inférieure ou égale à 2 cPs à une température inférieure ou égale à 55 °C; et
- un maximum de viscosité brookfield à une température comprise de 65°C, à 100°C ; et
- un maximum de viscosité brookfield compris de 100 cPs à 3000 cPs ;

la viscosité brookfield étant mesurée pour une solution aqueuse d'amidon oxydé à une concentration de 8%, pourcentage en masse.

L'amidon oxydé convenant selon l'invention peut être d'origine diverse par exemple de maïs, de blé, de pomme de terre ou de pois.

De préférence, l'amidon oxydé convenant selon l'invention est l'amidon de maïs.

De préférence, l'amidon oxydé présente une viscosité brookfield inférieure ou égale à 10 cPs à 60 °C, plus préférentiellement inférieure ou égale à 15 cPs à 64 °C.

De préférence, l'amidon oxydé présente un maximum de viscosité brookfield à une température comprise de 65°C à 85°C, plus préférentiellement à une température comprise de 68°C à 80°C.

De préférence, l'amidon oxydé présente un maximum de viscosité brookfield compris de 190 cPs à 1500 cPs.

La viscosité brookfield de l'amidon telle que définie dans la description et les revendications a été mesurée en préparant un mélange de 33,79 g d'amidon à 5,3 % d'humidité dans 366,21 g de solution saturée en gypse. La solution est chauffée jusqu'à 35°C puis chauffée avec un gradient de température de 3°C par minute jusqu'à 94°C. La solution est maintenue sous agitation pendant la montée en température. La viscosité est mesurée à différentes températures. Le viscosimètre est un viscosimètre Brookfield, modèle LV-DV1. Les mesures de viscosité ont été réalisées à 30 tours par minute en utilisant le mobile cylindrique LV2 code 62.

L'amidon convenant selon l'invention a été partiellement oxydé. Cela signifie que l'amidon a subi une réaction d'oxydation par un agent oxydant. L'amidon peut être oxydé par un oxydant comme l'hypochlorite de métal alcalin, par exemple l'hypochlorite de sodium (NaOCl) ou de l'iodate de sodium ($NalO_3$) ou de l'eau oxygénée ($H_2O_2$) ou de l'ozone. L'oxydation de l'amidon peut aussi être obtenue au moyen de permanganate de potassium, puis par des traitements à l'acide lactique et à l'acide citrique. Au cours de l'oxydation de l'amidon, des groupes carboxyles ou carbonyles sont généralement introduits sur la molécule d'amidon.

Avantageusement, l'amidon convenant selon l'invention peut être obtenu après d'autres traitements d'oxydation.

Avantageusement, la composition selon l'invention peut comprendre par ailleurs divers additifs ou adjuvants utilisés habituellement tels que des fluidifiants, des régulateurs de prise (accélérateurs et/ou retardateurs), des épaississants, des plastifiants, des agents de surface, des hydrofugeants, des agents moussants ou des charges inertes.

Selon différentes variantes de l'invention, la composition selon l'invention peut comprendre en outre

- un agent fluidifiant par exemple les Poly Mélamine Sulfonates (PMS), les Poly Naphtalène Sulfonates (PNS), les Poly Carboxylate Polyoxyéthylène (PCP) ;
- un agent épaississant par exemple des dérivés cellulosiques comme par exemple la carboxyméthylcellulose, la méthylhydroxypropylcellulose ou la méthylhydroxyethylcellulose, des gommes végétales comme par exemple les gommes acacia, adragante, caroube, dextrane, diutane, gellane, guar, scléroglucane, xanthane, welane, des polyoxydes d'éthylène, de l'amidon ou ses dérivés, la gélatine, les polysaccharides, les hydrocolloïdes, l'agar, les carraghénanes ou leurs mélanges;
- un agent plastifiant, notamment qui procure de la plasticité à la composition, par exemple une argile ;
- un agent de surface par exemple une huile silicone, une huile minérale, une huile végétale, du talc, du mica ou un dérivé silicaté ;
- des agents régulateurs de prise de type accélérateur (par exemple, germe de gypse, $K_2SO_4$, sel de sulfate, du Ball Milled Accelerator qui est un mélange de 50% de gypse, 40% d'amidon et 10% de lignosulfate de calcium) ou de type retardateur (par exemple des protéines dégradées ou non dégradées, des sucres, des polyacrylates) ;

- des charges inertes par exemple du carbonate de calcium, du gypse, du gypse issu des rebuts de plaque de plâtre ;
- des fibres, par exemple des fibres végétales ou minérales, des déchets de papier.

L'invention se rapporte également à un élément pour le domaine de la construction réalisé en utilisant une composition selon l'invention.

En particulier, l'invention se rapporte à une plaque de plâtre réalisée en utilisant une composition selon l'invention. Cette plaque de plâtre peut comprendre au moins un parement. Les parements généralement utilisés dans la fabrication des plaques de plâtre conviennent tout particulièrement, comme par exemple les parements en fibre de cellulose (par exemple les parements en papier, en papier recyclé) ou en fibre inorganique (par exemple les parements en fibre de verre). Cette plaque de plâtre peut comprendre au moins une couche de plâtre dense. Les couches de plâtre dense des plaques de plâtre conventionnelles conviennent tout particulièrement, par exemple les couches denses présentes dans la plaque de plâtre conventionnelle du type BA13.

L'invention se rapporte également à l'utilisation d'amidon oxydé pour augmenter la résistance mécanique du coeur des plaques de plâtre, l'amidon oxydé, ledit amidon présentant :

- une viscosité brookfield inférieure ou égale à 2 cPs à une température inférieure ou égale à 55 °C; et
- un maximum de viscosité brookfield à une température comprise de 65°C à 100°C ; et
- un maximum de viscosité brookfield compris de 100 cPs à 3000 cPs ;

la viscosité brookfield étant mesurée pour une solution aqueuse d'amidon oxydé à une concentration de 8%, pourcentage en masse.

Tout ce qui a été mentionné plus haut sur l'amidon entrant dans la composition selon l'invention est valable pour l'utilisation selon l'invention de l'amidon.

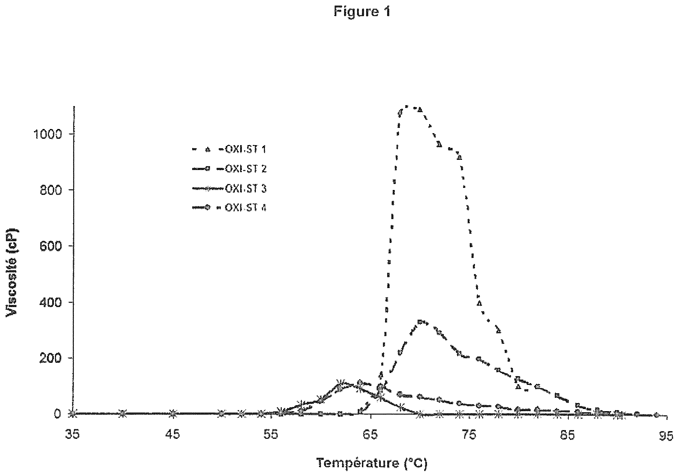

La figure 1 représente la viscosité de plusieurs amidons oxydés à différentes concentrations en agent oxydant en fonction de la température.

Les exemples suivants illustrent l'invention sans en limiter la portée.

## EXEMPLES

### 1/ Mesure de la viscosité

Le protocole suivant a été utilisé:

Matériels :

- une balance de précision ;
- un bécher pyrex de 500ml ;
- une plaque chauffante combinée avec un agitateur magnétique, et équipée d'une sonde de régulation de température ;
- un viscosimètre Brookfield LV-DV1 ;
- un thermomètre et une sonde de contrôle.

Réactifs :
- Amidon de maïs en poudre (« Native Corn Starch » de la société coréenne DAESANG,) ou amidon de maïs oxydé;
- Une solution saturée en plâtre provenant de l'usine Dangjin de la société Lafarge (solution la plus représentative du milieu liquide dans lequel l'amidon se trouvera dans la plaque de plâtre) ;
- Plâtre de Dangjin (Usine de la société Lafarge en Corée du sud).

### Tableau I : Caractéristiques du plâtre de DANGJIN

| Caractéristique | Unité | Valeur |
|---|---|---|
| Sulfate de calcium anhydre de type III | % | 9,30 |
| eau combinée | % | 6,19 |
| étalement | mm | 260 |

(suite)

| Caractéristique | | Unité | Valeur |
|---|---|---|---|
| temps de prise initiale | | | 05 min 26 sec |
| temps de prise finale | | | 14 min 12 sec |
| temps d'hydratation | | | 22 min 30 sec |
| US consistency | | % | 64 |
| | | | |
| Distribution granulométrique | d10 | μm | 2,1 |
| | d50 | μm | 30,0 |
| | d90 | μm | 70,7 |

Préparation d'une solution saturée en plâtre de DANGJIN :

15g de plâtre ont été pesé (la limite de solubilité étant de 11,8 g) pour obtenir une solution saturée en $Ca(SO_4)$, $2H_2O$. Ce gypse a été ajouté à 4,5L d'eau dans un erlenmeyer de 5L. La solution obtenue a été agitée pendant un minimum de 12 heures.

Les différents adjuvants ont été ajoutés dans les proportions précisées ci-dessous et l'agitation a continué pendant 1 h. La solution a été filtrée sur un filtre Büchner avec un papier filtre de la société Whatman, sans cendres grade 42, diamètre 125 mm.

Protocole :

Pour avoir une concentration d'amidon sec de 8% dans la solution saturée en plâtre de gypse Dangjin, 33,79 g d'amidon à 5,3 % d'humidité et 366,21 g de solution saturée en plâtre de Dangjin ont été pesés et mis dans un récipient. Ce récipient a été placé sur la plaque chauffante. La sonde de régulation a été introduite dans le récipient. La solution a été mise sous agitation à 300 tr/min et chauffée à 35°C. Le viscosimètre a été mis en place. Dès que la température de 35°C a été atteinte, le chronomètre a été démarré. La viscosité a été mesurée régulièrement à une vitesse de 30 tr/min et avec le mobile cylindrique LV2 code 62. Au bout de 20 minutes, la sonde de régulation de température a été retirée de la solution. La température de consigne de la plaque chauffante a été augmentée à 115°C. La sonde de contrôle de température (celle qui est reliée au boîtier) a été introduite dans la solution. Les mesures de viscosité ont continuées jusqu'à 94°C tout en notant le temps correspondant aux températures de mesure. La solution a été maintenue à 94°C jusqu'à obtenir la chute de la viscosité. Quand nécessaire il a été rajouté de l'eau pour ne pas changer la concentration de la solution à cause de l'évaporation. Dès que la chute de la viscosité a été obtenue, la solution a été refroidie et la viscosité a également été mesurée après refroidissement.

## 2/ Réaction d'oxydation de l'amidon par de l'eau de Javel

La cuve du réacteur à double enveloppe a été mise en place et la double enveloppe a été remplie par de l'eau thermostatée (ou un liquide caloporteur). Le réacteur a été mis à chauffer à 45°C. L'amidon et l'eau ont été pesés et introduits dans la cuve du réacteur. La pale d'agitation a été ajoutée, le couvercle a été mis en place afin de fermer l'agitation a été mise en marche à 200 tr/min, ainsi que le réfrigérant, l'ampoule de coulée et la sonde de pH et de température. Puis il a été attendu que le milieu réactionnel soit à environ 45°C. Le pH du milieu réactionnel a été ajusté à 9 par ajout de NaOH à 30 % (pourcentage en masse). L'eau de javel a été introduite progressivement et, à l'aide d'une ampoule de coulée. L'évolution du pH a été suivie. Le pH était compris de 8,5 à 9 durant toute la réaction. Lorsque le pH diminuait, de la soude a été ajoutée à l'aide d'une ampoule de coulée. Le mélange a été laissé sous agitation et température constante à 45°C pendant la durée de l'oxydation. La réaction a été stoppée en ajoutant du bisulfite de sodium goutte à goutte, tout en contrôlant le pH du mélange et sans arrêter l'agitation. Dès que le pH avait atteint la valeur de 7, la suspension d'amidon oxydé était obtenue. Une filtration a été réalisée sur un filtre Büchner avec un papier filtre de la société Whatman, sans cendres grade 42, diamètre 125 mm. Puis le gâteau de filtration obtenu a été lavé deux ou trois fois avec de l'eau. Le solide obtenu après le filtrage a été refroidi dans le congélateur, puis séché par lyophilisation. De l'amidon oxydé en poudre a été obtenu.

Le tableau II ci-dessous indique les conditions d'oxydations pour chaque amidon.

**Tableau II : conditions d'oxydation**

| | OX-ST 1 | OX-ST 2 | OX-ST 3 | OX-ST 4 |
|---|---|---|---|---|
| Rapport massique NaClO/Amidon natif sec | 5% | 5% | 10% | 5% |
| Amidon natif de maïs à 87,5 % d'Extrait Sec (g) | 200 | 200 | 200 | 200 |
| Eau déminéralisée (g) | 600 | 600 | 600 | 600 |
| Soude caustique à 30 % massique de NaOH (g) | 4,8 | 4 | 1,5 | 3,8 |
| Solution aqueuse de NaClO à 10 % massique (g) | 100 | 100 | 200 | 100 |
| Solution de bisulfite de sodium à 39 % massique (g) | 2 | 3,76 | 5 | 2,5 |
| Température du milieu réactionnel | 45 °C | 45 °C | 45 °C | 45 °C |
| Durée de l'oxydation | 30 min | 60 min | 60 min | 120 min |
| pH de l'oxydation, | 9 | 9 | 9 | 9 |

Les amidons oxydés OX-ST 1, OX-ST 2, OX-ST 3 et OX-ST 4 présentaient tous une teneur en amylose de 25 à 28 % et une teneur en amylopectine de 72 à 75 % pourcentage en masse.

### 3/ Réalisation de mini-plaques de plâtre

Protocole :

Les mini-plaques ont été réalisées au laboratoire à 20°C. Ces mini-plaques ne comprennent pas de parements. Le malaxage a été effectué au Malaxeur Hobart (Référence Hobart: Modèle N50, 3 vitesses, agitateur planétaire, fouet inox)

Une pâte de plâtre a été préparée de la manière suivante. Les poudres (plâtre de Dangjin et adjuvants solides) ont été introduites dans le malaxeur et mélangées à sec à la vitesse 1 (60 tr/min) pendant 5 minutes. Puis l'eau de gâchage a été ajoutée (avec les adjuvants liquides dans l'eau, sans agent moussant) sur les poudres en 10 secondes, le malaxeur fonctionnant à la vitesse 1 (60 tr/min). Puis le mélange a été maintenu à la vitesse 1 (60 tr/min) pendant 15 secondes. Le moteur du malaxeur a été arrêté pendant 20 secondes, et les parois du bol de malaxage ont été raclées avec la pâle. Le malaxeur a été remis en route à la vitesse 2 (120 tr/min) pendant 10 secondes.

Une fois le malaxage terminé, la pâte a été versée dans un moule horizontal en PVC rigide de 30 cm de côté et de 13 mm de hauteur avec un fond en PVC. Le restant de pâte a été versé sur une plaque de verre afin de mesurer le temps de prise couteau et le temps de prise Gilmore.

Le moule a été secoué légèrement et la surface de la pâte a été étalée une fois à l'aide d'un rouleau. Il a été attendu quelques minutes (2 à 3 minutes) la disparition des grandes bulles en surface, puis il a été appliqué sur la pâte de plâtre, une plaque de verre au dessus du moule en commençant par un bord.

Une fois la prise Gilmore atteinte (après 10 minutes environ), la plaque de verre a été enlevée délicatement. La plaque de plâtre obtenue a été démoulée, puis placée dans un sac en plastique. Le sac a été fermé hermétiquement et le plâtre a été laissé s'hydrater pendant 60 minutes à température ambiante. Ces opérations ont permis d'éviter l'évaporation de l'eau des plaques.

La plaque dans le sac plastique fermé a subi ensuite une cure à 90 °C pendant 60 minutes dans une étuve. Cette opération a permis de gélatiniser au maximum les amidons dans le coeur de la plaque. Le sac hermétique a permis de conserver l'humidité saturé de l'atmosphère qui entourait la plaque, et ainsi prévenir la migration d'eau au cours de la cure, Par conséquent, il n'y a pas eu de migration possible des amidons vers la surface des plaques.

Après la cure, les plaques ont été sorties de leur sac et sèchées dans une étuve pendant 24h à 45°C, RH régulée à 6% (jusqu'à masse constante). Les plaques ont ensuite été découpées en carrés de 5 cm par 5 cm et conditionnés à l'étuve durant la nuit à 45°C, RH régulée à 6%. La densité a ensuite été mesurée ainsi que la résistance à la compression des carrés de plâtre (mini-plaques).

Mesure de la résistance à compression :

La résistance à la compression des miniplaques est caractérisée par la valeur de M1 selon l'équation suivante :

$$M1 = \frac{Rc\ (Mpa)}{\left(\text{densité sèche cœur} * \text{pureté gypse} * \text{taux d'hydraté}\right)^3}$$

Où :

La résistance à la compression (Rc) est calculée par l'équation suivante :

$$Rc = \frac{F}{L_1 L_2}$$

L1 et L2 sont la largeur et la longueur de la plaque testée et F est la force appliquée.

**Tableau III : Caractéristiques des plaques de plâtre avec et sans amidons**

|  | Dosage d'amidon (g/m$^2$) | Epaisseur des plaques (mm) | Densité (g/cm$^3$) | Duré de la cure à 90 °C en minutes | Résistance à la compression (Mpa) |
|---|---|---|---|---|---|
| Témoin sans amidon | 0 | 13 | 1 | 30 | 19,64 |
| Témoin sans amidon | 0 | 13 | 1 | 60 | 18,73 |
| Témoin sans amidon | 0 | 13 | 1 | 120 | 17,99 |
| OX-ST 1 | 100 | 13 | 1 | 60 | 21,42 |
| OX-ST 1 | 100 | 13 | 1 | 120 | 22,52 |
| OX-ST 2 | 100 | 13 | 1 | 60 | 22,16 |
| OX-ST 2 | 100 | 13 | 1 | 120 | 22,18 |

**Revendications**

1. Composition comprenant du sulfate de calcium semihydraté ou anhydre, de l'eau et de l'amidon oxydé, le dit amidon oxydé présentant:

   - une viscosité brookfield inférieure ou égale à 2 cPs à une température inférieure ou égale à 55°C; et
   - un maximum de viscosité brookfield à une température comprise de 65°C à 100°C; et
   - un maximum de viscosité brookfield compris de 100 cPs à 3000 cPs;
   - la viscosité brookfield étant mesurée pour une solution aqueuse d'amidon oxydé à une concentration de 8%, pourcentage en masse.

2. Composition selon la revendication 1, **caractérisée en ce que** l'amidon oxydé présente une viscosité brookfield inférieure ou égale à 15 cPs à 64°C.

3. Composition selon la revendication 1 ou 2, **caractérisée en ce que** l'amidon oxydé présente son maximum de viscosité brookfield à une température comprise de 65°C à 85°C.

4. Composition selon l'une quelconque des revendications 1 à 3, **caractérisée en ce que** l'amidon oxydé présente un maximum de viscosité brookfield compris de 190 cPs à 1500 cPs.

5. Composition selon l'une quelconque des revendications 1 à 4, **caractérisée en ce que** l'amidon est partiellement oxydé.

6. Elément pour le domaine de la construction, **caractérisé en ce qu'**il est réalisé en utilisant une composition selon l'une quelconque des revendications 1 à 5.

7. Elément selon la revendication 6 **caractérisé en ce qu'**il s'agit d'une plaque de plâtre.

8. Utilisation d'amidon oxydé pour augmenter la résistance mécanique du coeur des plaques de plâtre, ledit amidon oxydé présentant:

   - une viscosité brookfield inférieure ou égale à 2 cPs à une température inférieure ou égale à 55°C; et
   - un maximum de viscosité brookfield à une température comprise de 65°C à 100°C; et
   - un maximum de viscosité brookfield compris de 100 cPs à 3000 cPs ;

la viscosité brookfield étant mesurée pour une solution aqueuse d'amidon oxydé à une concentration de 8%, pourcentage en masse.

**Patentansprüche**

1. Zusammensetzung, umfassend Calciumsulfathemihydrat oder -anhydrit, Wasser und oxidierte Stärke, wobei die oxidierte Stärke Folgendes aufweist:

   - eine Brookfield-Viskosität kleiner gleich 2 cPs bei einer Temperatur kleiner gleich 55°C; und
   - eine maximale Brookfield-Viskosität bei einer Temperatur von 65°C bis 100°C; und
   - eine maximale Brookfield-Viskosität von 100 cPs bis 3000 cPs;

wobei die Brookfield-Viskosität für eine wässrige Lösung der oxidierten Stärke mit einer Konzentration von 8 Gewichtsprozent gemessen wird.

2. Zusammensetzung nach Anspruch 1, **dadurch gekennzeichnet, dass** die oxidierte Stärke eine Brookfield-Viskosität kleiner gleich 15 cPs bei 64°C aufweist.

3. Zusammensetzung nach Anspruch 1 oder 2, **dadurch gekennzeichnet, dass** die oxidierte Stärke eine maximale Brookfield-Viskosität bei einer Temperatur von 65°C bis 85°C aufweist.

4. Zusammensetzung nach einem der Ansprüche 1 bis 3, **dadurch gekennzeichnet, dass** die oxidierte Stärke eine maximale Brookfield-Viskosität von 190 cPs bis 1500 cPs aufweist.

5. Zusammensetzung nach einem der Ansprüche 1 bis 4, **dadurch gekennzeichnet, dass** die Stärke teilweise oxidiert ist.

6. Element für den Baubereich, **dadurch gekennzeichnet, dass** es unter Verwendung einer Zusammensetzung nach einem der Ansprüche 1 bis 5 hergestellt wird.

7. Element nach Anspruch 6, **dadurch gekennzeichnet, dass** es sich um eine Gipsplatte handelt.

8. Verwendung von oxidierter Stärke zur Erhöhung der mechanischen Festigkeit des Kerns der Gipsplatten, wobei die oxidierte Stärke Folgendes aufweist:

   - eine Brookfield-Viskosität kleiner gleich 2 cPs bei einer Temperatur kleiner gleich 55°C; und
   - eine maximale Brookfield-Viskosität bei einer Temperatur von 65°C bis 100°C; und
   - eine maximale Brookfield-Viskosität von 100 cPs bis 3000 cPs;

wobei die Brookfield-Viskosität für eine wässrige Lösung der oxidierten Stärke mit einer Konzentration von 8 Gewichtsprozent gemessen wird.

**Claims**

1. Composition comprising calcium sulphate hemihydrate or anhydrous calcium sulphate, water and oxidized starch, said oxidized starch having:

   - a Brookfield viscosity of less than or equal to 2 cPs at a temperature of less than or equal to 55°C; and
   - a maximum Brookfield viscosity at a temperature of from 65°C to 100°C; and
   - a maximum Brookfield viscosity of from 100 cPs to 3000 cPs;
   - the Brookfield viscosity being measured for an aqueous solution of oxidized starch at a concentration of 8%, as a percentage by weight.

2. Composition according to Claim 1, **characterized in that** the oxidized starch has a Brookfield viscosity of less than or equal to 15 cPs at 64°C.

3. Composition according to Claim 1 or 2, **characterized in that** the oxidized starch has its maximum Brookfield viscosity at a temperature of from 65°C to 85°C.

4. Composition according to any one of Claims 1 to 3, **characterized in that** the oxidized starch has a maximum Brookfield viscosity of from 190 cPs to 1500 cPs.

5. Composition according to any one of Claims 1 to 4, **characterized in that** the starch is partially oxidized.

6. Component for the construction field, **characterized in that** it is produced using a composition according to any one of Claims 1 to 5.

7. Component according to Claim 6, **characterized in that** it is a plasterboard.

8. Use of oxidized starch for increasing the mechanical strength of the core of plasterboards, said oxidized starch having:

   - a Brookfield viscosity of less than or equal to 2 cPs at a temperature of less than or equal to 55°C; and
   - a maximum Brookfield viscosity at a temperature of from 65°C to 100°C; and
   - a maximum Brookfield viscosity of from 100 cPs to 3000 cPs;

   the Brookfield viscosity being measured for an aqueous solution of oxidized starch at a concentration of 8%, as a percentage by weight.

Figure 1